(19)

Europäisches
Patentamt
European
Patent Office
Office européen
des brevets

(11) **EP 2 163 918 A1**

(12) **EUROPEAN PATENT APPLICATION**

(43) Date of publication:
**17.03.2010 Bulletin 2010/11**

(51) Int Cl.:
*G01V 1/00* *(2006.01)*       *G01V 1/42* *(2006.01)*

(21) Application number: **08251855.6**

(22) Date of filing: **28.05.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **BP Exploration Operating Company
Limited
Sunbury on Thames Middlesex TW16 7BP (GB)**

(72) Inventor: **The designation of the inventor has not
yet been filed**

(74) Representative: **Ford, Louise Diane et al
BP International Limited
Global Patents & Technology Law
Chertsey Road
Sunbury on Thames, Middlesex TW16 7LN (GB)**

(54) **Seismic survey method**

(57) A method of conducting a seismic survey comprises using at least one seismic source, at least one seismic receiver and at least two generally horizontal boreholes extending through a region of the ground to be surveyed, at least one of the boreholes being provided with at least one seismic receiver positioned therein (receiver borehole) and at least one of the boreholes being provided with at least one seismic receiver, at least one seismic source or at least one seismic receiver and at least one seismic source positioned therein, wherein the seismic source(s) emits an acoustic signal and the seismic receiver(s) records the reflection of the acoustic signal.

EP 2 163 918 A1

## Description

The present invention relates to a method of conducting a seismic survey, and particularly to one where the seismic receivers and optionally the seismic sources are located underground.

Seismic surveys are used extensively in the petroleum industry to help identify formations in the earth that may store oil and gas. Conventional seismic surveys are carried out by placing seismic receivers along two dimensional lines over the ground, the lines being arranged parallel to each other to cover an area of the ground. A seismic source travels along a series of shot lines in turn, producing a signal at several points along each line. For each signal, the receivers record the reflection from the underlying formations.

Variations of this common method have been developed for particular situations. For example, a method for imaging vertical interfaces, such as the flank of a salt dome, near a well bore is described in EP 0443234. In this method, a plurality of sources are arranged along the surface and a plurality of receivers are arranged at varying depths down an existing well bore. The sources are located on the side of the receivers opposite that of the location of the vertical interface such that acoustic pulses first pass the receivers on their way to the vertical interface and then are reflected back towards the receivers by the vertical interface. In this way, data in connection with the vertical interface can be gathered. This type of arrangement is common for imaging structures around well bores.

Another method is described in WO 03/023450, which deals with problematic distortion of seismic signals caused by a complex transmission medium, such as a complex overburden. The document teaches arranging a number of seismic sources on the surface and a number of seismic receivers in a borehole. The part of the borehole in which the seismic receivers are located lies under a complex transmission medium so that the complex transmission medium is between the sources and the receivers. The method comprises the steps of:

> (a) recording with the set of seismic receivers j the signals $t_{ij}(t)$ obtained from activating the set of seismic sources i;
> (b) selecting a seismic receiver m as the location of a virtual source;
> (c) selecting a seismic receiver k, wherein k is in a predetermined range around the position of seismic receiver m;
> (d) selecting a seismic source n from the seismic sources i;
> (e) time-reversing at least a part of the signal $t_{nm}(t)$ to obtain a time-reversed signal $t_{nm}(-t)$;
> (f) convolving the time-reversed signal $t_{nm}(-t)$ with the signal $t_{nk}(t)$ to obtain the convolved signal $t^{conv}_{nmnk}(t) = t_{nm}(-t) ¤ t_{nk}(t)$, where the symbol ¤ means convolution;

> (g) selecting a next source n, repeating steps (e) and (f) until a predetermined number of sources have had their turn;
> (h) summing the convolved signals over the seismic sources n to obtain a signal
>
> $$t^{vs}_{mk}(t) = \sum_n t^{conv}_{nmnk}$$
>
> where $t^{vs}_{mk}(t)$ is the signal received by a receiver at the position k from a virtual source at the position of receiver m;
> (i) repeating steps (c) through (h) over k;
> (j) repeating steps (b) through (i) over m to generate a seismic survey with virtual sources m and receivers k; and
> (k) further processing the virtual source signals to obtain a seismic image.

This method therefore manipulates the signals in such a way that it appears as if the seismic waves originate from a source at the location of one of the seismic receivers. Such a source is then called a virtual source, to distinguish it from a real source. This allows the distortions in the signal caused by the seismic waves travelling through the complex overburden to be suppressed.

However, there remain situations in which use of the known seismic survey techniques is still problematic. For example, in environmentally sensitive regions, such as the tundra, disturbances to the environment and the ecosystem must be minimised or avoided. Consequently, such activities are heavily regulated by government bodies. For example, execution of seismic surveys is limited to the brief period each year when the top layer of the ground is frozen hard (typically about 100 days), in an attempt to minimise the extent of damage caused, and the overall number of surveys is restricted so as to avoid excessive damage.

Also, it has become desirable recently to use seismic surveys to monitor changes in oil and gas reserves in known reservoirs. For example, movement of the fluid in the formation or depletion of the reservoir over time can be tracked. To do this, three dimensional seismic data must be acquired repeatedly from an area (i.e. 4-D surveys) in order to identify changes over time. Sufficient repetitions of surveys of the same area are not currently common in the tundra or other environmentally sensitive regions. This is because of the difficulties in conducting repeat surveys, particularly (a) regulatory approval for repeat surveys can be difficult to obtain, (b) environmental conditions vary over time, thus affecting the results of the seismic surveys and also (c) because the short window in each year in which surveys can be conducted imposes strict time constraints. Further, such repetitions are extremely expensive and the benefit may not always warrant the expense, inconvenience and environmental implications.

Existing seismic survey methods do not address the problems encountered in tundra regions. Conventional seismic survey methods in which lines of receivers are laid out on the surface and a source is moved along the lines, cause significant environmental disturbances and are therefore unpopular with the regulating bodies. The methods involving placing receivers underground use existing hydrocarbon production/injection boreholes, and enable only the area around that borehole to be surveyed and do not, therefore, fulfil the requirements of many seismic surveys.

In addition, the method taught in WO 03/023450 is computationally complex and demanding, which can be costly and time consuming, delaying image production. Where multiple surveys of the same area are desirable, these factors render this method economically unfeasible. Also, complex transmission media are often found deep underground, such as 1km deep. Accordingly, a deep borehole must be used in order to position the receivers below the complex transmission medium. Such deep boreholes must be drilled using large drilling rigs which cause significant surface damage and are expensive.

The invention has been made with these points in mind.

According to the present invention, a method of conducting a seismic survey comprises using at least one seismic source, at least one seismic receiver and at least two generally horizontal boreholes extending through a region of the ground to be surveyed, at least one of the boreholes being provided with at least one receiver positioned therein (receiver borehole) and at least one of the boreholes being provided with at least one receiver, at least one source or at least one receiver and at least one source positioned therein, wherein the seismic source(s) emits an acoustic signal and the seismic receiver(s) records the reflection of the acoustic signal.

According to a second aspect of the invention, a seismic survey system comprises at least one seismic source, at least one seismic receiver and at least two generally horizontal boreholes extending through a region of ground to be surveyed, at least one of the boreholes having at least one seismic receiver positioned therein and at least one of the boreholes having at least one seismic receiver, at least one seismic source or at least one seismic receiver and at least one seismic source positioned therein, wherein the seismic receiver(s) is adapted to record reflected acoustic signals emitted by the seismic source(s).

The present invention provides a seismic survey method and system which is suitable for surveying environmentally sensitive regions such as the tundra. By positioning the receivers and optionally the sources below ground, there is less impact on the environment since the amount of surface activity is significantly reduced. Even where the source is arranged on the surface, the impact on the environment is much less than it would be if the receivers were also arranged on the surface. This is particularly so where there are two or more receiver lines (i.e. where two or more boreholes are provided with receivers positioned therein). Further, a survey in which the receiver is located in a borehole below ground can be conducted more efficiently and therefore much faster than if the receivers were located on the surface. A survey according to the present invention is therefore cheaper than conventional surveys.

In addition, if the receivers are removed after a first survey, they can be repositioned with a high degree of accuracy in order to repeat the survey. Alternatively, since the receivers are located under ground, they may be left in situ between surveys, which is both efficient in terms of set up times and costs, but also ensures identical positions of the receivers for each survey.

Optionally, at least one seismic receiver is positioned in each of the boreholes and said seismic source is positioned on the surface above. In this way, a large area of land can be surveyed in a single survey operation, whilst causing less damage to the environment, since all the receivers are located underground.

In a preferred embodiment, though, said seismic source is positioned in at least one of the boreholes (source borehole). Optionally, multiple receiver boreholes and/or multiple source boreholes are provided. Arranging both the seismic receiver(s) and the seismic source(s) in boreholes is particularly advantageous since any number of seismic surveys may be conducted at any point throughout the year without causing any disturbance to the surface environment. This has clear benefits in terms of planning and conducting seismic survey operations and therefore for facilitating repeat seismic surveys, whilst also causing little or no environmental damage.

In addition, the quality of the seismic data is improved by positioning both the receivers and the sources below ground. Firstly, for each individual survey, the signal to noise ratio is reduced as disturbances which can arise in the signal as it passes from the source through the shallow layers of the tundra are eliminated. Further, problems encountered when conducting repeat surveys are reduced or avoided. In more detail, changes in environmental conditions from a first survey of an area to a second survey of an area, such as changes in the water table or the amount of snow or ice at the surface, affect the seismic data obtained in conventional surface surveys. By positioning both the seismic receivers and the seismic sources below ground, changes in environmental conditions have little or no impact on the seismic data obtained in repeated surveys.

A plurality of spaced apart receivers may be provided in each receiver borehole. The receivers may be adapted to be stationary in use. Accordingly, sufficient receivers are provided to extend along the length of the receiver borehole. Alternatively, a movable receiver can be provided in each receiver borehole, the receiver being moveable from one pre-designated receiver position to subsequent pre-designated receiver positions in turn. In this way, less hardware is required. However, in the preferred embodiment, a set of receivers are provided in each receiver borehole. The receivers may be spaced apart from each other within the set, for example by between 20m and 50m, typically about 25m, and the set can be movable along the borehole. For example, the set can move along the borehole in increments of predefined distance. In this way, a subsequent position of the set can overlap with or be adjacent to the previous position of the set. In one embodiment, where the position of the set overlaps with previous positions, the set can move in increments of up to 10m, up to 5m, and advantageously between 1m and 2m. This embodiment has the advantage that a significantly greater amount of information can be obtained than previously possible, because reflections are recorded at each small increment. In contrast, seismic data is obtained in conventional surveys only at points separated by the distance between the receivers, which is typically 25m.

A plurality of spaced apart sources may be provided in each source borehole. The sources may be adapted to be stationary in use. In this case, an acoustic signal is emitted by a different seismic source at each of several shot points arranged along the source borehole. Alternatively, one or more movable seismic sources may be provided in each source borehole, each source being movable from one pre-designated shot point to subsequent pre-designated shot points along the source borehole.

Means for moving the seismic receivers and/or the seismic sources can be provided in each of the boreholes.

The seismic source is ideally in a different borehole to the borehole in which the seismic receiver(s) is located. It has been found that locating the source(s) and the receiver(s) in the same borehole can result in noise.

Although the source and receiver boreholes can be separated in depth, for example by 200m, it is preferred that the source and receiver boreholes are close together in depth. For example, there is preferably less than 200m, more preferably less than 20m in the vertical direction between the source and receiver boreholes, though less than 10m is particularly preferred. This avoids the need for additional computational steps to take a large depth separation into account.

The boreholes are preferably relatively shallow, at least compared with boreholes used in oil and gas production, such as well bores and sidetracks, which can be over a kilometre deep. For example, the boreholes can be between 20m and 500m deep, preferably 20m to 100m deep. Techniques used to drill boreholes at this depth are typically simpler, more readily available and therefore cheaper than techniques used to drill at deeper levels, such as techniques for drilling hydrocarbon production/injection wells, which require expensive drilling rigs. Companies which drill boreholes for utilities and pipelines can be used to drill the shallow boreholes for the invention.

One or more shot lines are pre-designated, the shot lines having a plurality of shot points along each line such that an acoustic signal is emitted from each shot point during the survey.

The shot line(s) can extend in a non-parallel direction to the direction in which the receiver borehole extends. Accordingly, where the source is positioned in a borehole, rather than on the surface, the source borehole and the receiver borehole are non-parallel. The shot line advantageously extends at an angle of between 45° and 135°, and ideally at approximately 90°, to the direction in which the receiver borehole extends. Such an arrangement is particularly efficient as it achieves a 3 dimensional scan of a large area.

The boreholes used in the method of the present invention are typically drilled specifically for use in the seismic survey, rather than being existing hydrocarbon production/injection boreholes. Accordingly, the method may include the steps of determining positions for boreholes suitable for use in the seismic survey, and drilling the boreholes in the positions so determined.

The exact arrangement of the shot line(s) and boreholes may optimise the efficiency of the seismic survey, in which case the angle between the shot line(s) and the receiver borehole(s) is approximately 90°. Alternatively, the arrangement may minimise the environmental impact of the survey, as discussed in more detail below. Optionally, the arrangement of the shot line(s) and the boreholes is a compromise between these two considerations. The impact on the environment can be minimised by locating an entrance and/or an exit of the boreholes at a pre-existing surface structure, for example a pre-existing man-made surface structure such as a road or a pad. A pad is an area of man-made construction which provides a stable surface on which to build, position or store equipment used in the oil and gas exploration and production industry. For example, drilling rigs and production facilities can be located on pads. Pads are typically of concrete or similar construction and can be viewed as man-made islands in the environmentally sensitive region such as the tundra.

In this way, drilling of the boreholes and the seismic survey operation may be conducted from the pre-existing structure, thereby reducing or avoiding damage to the environment.

Advantageously, a fluid is present in the boreholes to acoustically couple the seismic receiver and, where the seismic source is located in a borehole, the seismic source to the surrounding earth. In this way, improved coupling between the earth and the receivers and sources can be achieved compared with arrangements in which the receivers and sources are located on the surface. Improved seismic data can therefore be obtained.

It can be seen that the above-described method achieves particular advantages for conducting a seismic survey in environmentally sensitive regions such as the tundra

The invention will now be described, by way of example only, with reference to the accompanying figures, in which:

> Figure 1 is a side representation of a seismic survey system according to a first embodiment;
> Figure 2 is a side representation of a seismic survey system according to a second embodiment; and
> Figure 3 is a representation from above of another seismic survey system.

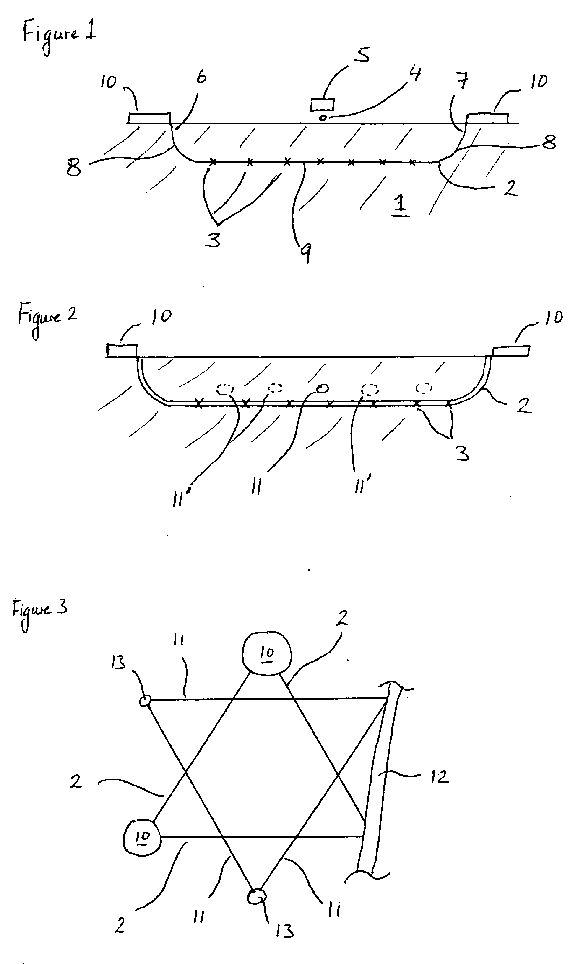

Figure 1 shows an embodiment of the invention which can be used to conduct seismic surveys in the tundra. In this embodiment, two or more generally horizontal boreholes (2) extend below the surface of the ground (1) (only one borehole can be seen in the side view shown in Figure 1). A plurality of seismic receivers (3) are located in each of the boreholes (2) to record reflected acoustic signals emitted by a seismic source (5) positioned on the surface.

Each generally horizontal borehole (2) has an entrance (6) and an exit (7) which leads to sloped portions (8) of the borehole. Between the sloped portions (8) extends a generally horizontal portion (9). Although the generally horizontal portion (9) of the borehole (2) is ideally as horizontal as possible, it need not be perfectly horizontal along the full length of the horizontal portion. In other words, some variation in the depth of the horizontal portion can be tolerated, for example if required for simplicity of drilling the borehole through the subterranean formation. In some embodiments, the borehole (2) may have a gentle curve along its entire length. However, in essence, the generally horizontal borehole extends in the horizontal direction more than in the vertical direction.

The angle of incline of the sloped portions (8) is such that the survey equipment can manoeuvre around the curve of the sloped portion into the horizontal portion (9).

The horizontal portion (9) extends through the permafrost (i.e. below the top layer that thaws in summer) and so is typically between 20m and 100m below the surface.

For optimum data acquisition, the receiver boreholes (2) are generally parallel to each other, though they may also be non-parallel. The boreholes (2) are at a similar depth to each other. Although some variation in depth is permissible, for example if variations in the earth's layers exist which render it difficult to drill at a particular depth, this variation should ideally be minimised.

The boreholes (2) are lined so as to provide an isolated environment in the boreholes.

The plurality of seismic receivers (3) are typically geophones or similar sensors. The receivers are positioned, spaced apart, in each of the generally horizontal boreholes. The separation between adjacent receivers (3) in each borehole can be selected for the particular survey in the same way as for conventional surface surveys, as is well known to the skilled reader. Typical separations are between 25m and 50m.

The receivers (3) are fixed in position in the boreholes (2), although they can be removed from the boreholes after the survey and repositioned before a later survey. Alternatively, they may be movable so that they can move along the boreholes, as will be discussed in more detail below.

A fluid is provided in the lined boreholes (2), which acts to couple the receivers (3) to the surrounding formation (1). The fluid can also include an anti-freeze agent to prevent the fluid freezing.

The receiver boreholes (2) should be wide enough to house the receivers (3). For example, a borehole may be 3inches (7.62cm) in diameter, but is likely to be wider, such as 8inches (20cm) wide.

A pre-defined shot line (4) extends along the surface at approximately 90° to the boreholes (2) (i.e. in/out of Figure 1). A plurality of shot points are pre-designated along the length of the shot line (4) and the seismic source (5), such as a vibrating pad mounted on a truck, is located on the surface. The seismic source (5) starts at one of the shot points and emits an acoustic signal, the reflections of which are recorded by the seismic receivers (3). The seismic source (5) is then moved to a second shot point and a further acoustic signal is emitted, and so on until the seismic source has emitted a signal at each of the shot points along the shot line (4). In this way, data for forming a three-dimensional image of the subterranean formation (1) can be obtained.

More than one shot line may be defined along the surface, each of which is provided with a seismic source as discussed above. The shot lines are normally generally parallel to each other.

With this arrangement of receivers, a seismic survey can be conducted over an area of land so as to obtain a three dimensional image of the ground below.

Although the method of the invention may be able to make use of existing boreholes, it is likely that new boreholes will have to be drilled specifically for housing the recievers. Where possible, the new boreholes will be arranged between pre-existing structures such as roads or pads (10), as shown in Figure 1, in which the entrance (6) and exits (7) of the generally horizontal boreholes are located adjacent such pre-existing surface structures. In this way, the drilling equipment can be transported along existing roads and operated from or adjacent to the roads/pads. This means that the drilling process need not disturb the tundra to any significant extent. This also has the significant advantage that the boreholes can be drilled and the seismic receivers positioned in the boreholes during the summer months when it is not permissible to operate on the soft tundra. Accordingly, with this embodiment of the invention, the preparation stages of a seismic survey (drilling the boreholes and positioning the receivers) can be conducted at a time of the year (i.e. summer months) when previously no action was possible, thus allowing more time during the winter months to conduct the actual survey(s).

The boreholes can be drilled using drilling techniques used by utility companies or techniques used for drilling pipelines, and do not involve heavy drilling rigs employed in hydrocarbon production/injection well drilling, which can be difficult to obtain and expensive.

While this method requires the seismic sources (5) to travel over the surface of the tundra, the process of arranging and laying out the receivers (3) is not conducted over ground. This results in a significant reduction in disturbance to the ground, which is naturally beneficial to the environment.

This benefit is seen particularly in situations where four dimensional seismic surveys are desired. In such situations, a survey of an area must be repeated several times, for example at 6 month intervals. The method according to the invention allows the receivers (3) to be removed from the boreholes (2) after a survey and then replaced in preparation for a further survey without any additional disturbance to the ground. The receivers (3) may even be left in situ in the boreholes (2), thus making significant savings in labour and therefore cost. In contrast, with conventional surface techniques the receivers are removed after each survey and then re-laid in preparation for the next survey, thereby causing significantly more disturbance to the ground and risking variations in the positions of the receivers which would affect the consistency of the seismic data.

Figure 2 shows a second embodiment of the invention. This embodiment is similar to that described above in connection with Figure 1, and so like reference numerals refer to like features. In this embodiment, the seismic source is also located in a generally horizontal borehole (11) (source borehole), shown in Figure 2 to extend in/out of the page, and only one receiver borehole (2) is provided. The source borehole (11) is generally perpendicular to the receiver borehole (2) and can extend between two surface structures in the same way as the receiver borehole. The source borehole (11) has generally the same shape and construction as the receiver borehole (2), the details of which are discussed above, though it is located above the receiver borehole by about 10m.

A plurality of shot points are pre-designated in the source hole (11) in the same way as discussed above. Accordingly, the source located in the source borehole moves from shot point to shot point in the borehole, emitting an acoustic signal at each shot point. More than one seismic source can be located in the source borehole (11) if desired, each source moving to sequential shot points allocated to that source.

Additional source boreholes (11') (as shown by dotted lines in Figure 3) and additional receiver boreholes (not shown) can be used in practice, so as to cover a larger area in the seismic survey. If possible, taking into account the environmental impact of forming borehole entrances and exits at desired locations, the source boreholes (11,11') and receiver boreholes (2) are generally perpendicular to each other. However, as discussed above, to avoid excessive damage to the surface caused by drilling rigs and other equipment, it is preferred that the boreholes have their entrances and exits at pre-existing structures, as much as possible. This consequently results in the boreholes sometimes being arranged at non-perpendicular angles to each other, as shown in Figure 3. In Figure 3, the receiver boreholes (2) extend between pre-existing roads (12) or pads (10), whereas the source boreholes (11) extend between pads (13) which are newly formed specifically for the seismic survey. Thus the position of the boreholes is a compromise between minimising environmental damage and achieving good seismic data.

These embodiments, where the sources are also located in boreholes, are particularly advantageous compared with prior art methods since there is very little or no disturbance at all to the ground across the survey area. Additionally, the sources may be left in situ in the source boreholes (11) in the same way as described above with respect to the receivers (3).

Source boreholes (11) are also lined and are also provided with a fluid therein to aid coupling between the sources and the surrounding formation. It is particularly useful to provide a fluid in the source boreholes which comprises an anti-freeze agent, so that the interior of the source boreholes does not become frozen, as this would prevent the sources from being moved from shot point to shot point.

Further details of an embodiment of the invention will now be described with reference to Figure 3. A plurality of spaced apart shot points are pre-designated along each source borehole (11) and a seismic source is positioned at the first shot point in each of the source boreholes. A set of receivers are arranged in each of the receiver boreholes, the spacing between adjacent receivers in each set being 25m. Each set is arranged within its respective receiver borehole so that a first receiver in the set is adjacent one end of the borehole, the other receivers in the set being positioned further into the borehole.

The source in a first one of the source boreholes is activated so that it emits an acoustic signal from the first shot point in the borehole. The receivers listen for and record the acoustic reflections. The source is then moved to its second shot point.

In the meantime, the source in a second one of the source boreholes is activated so that it emits an acoustic signal from the first shot point in the second source borehole, and the reflections are recorded by the receivers. The source is then moved to its second shot point.

At this point, the source in the third source borehole is activated so that it emits an acoustic signal from the first shot point in that source borehole, and reflections are recorded by the receivers. The source is then moved to its second shot point.

Next, the source in the first source borehole, which is now located at the second shot point, is activated so that it emits an acoustic signal from the second shot point in the borehole, and the reflections are recorded.

The survey continues in this manner, with each source in each of the boreholes being activated at each shot point in turn. When an acoustic signal has been emitted from each shot point in each source borehole, the sources are moved back to the first shot point in the respective borehole. The set of receivers in each receiver borehole is then moved along the receiver borehole by a pre-defined increment, for example 1m. The process of emitting an acoustic signal from each shot point in each of the boreholes is repeated with the receivers in this new position, and then each set of receivers is moved on by the pre-defined increment again, and so on.

It can be seen that a significant amount of seismic data can be obtained using the present invention, providing high quality and therefore very useful survey results. Although this process can take longer than conventional survey techniques, since the receivers and sources are located below ground, there is no prolonged impact on the environment.

Rather than activating only one of the sources at any one time, each source can be activated independently from the other sources in accordance with the method set out in WO 08/025986.

Although the particular advantages of using the method and system of the invention in environmentally sensitive regions such as the tundra have been discussed, use of the method and system can also be beneficial in other regions. For example, in regions of rough or rocky terrain, locating the seismic receivers and optionally the seismic sources in boreholes can simplify a seismic survey operation. This is because identifying suitable positions on the surface for the receivers and sources and then moving the receivers and sources into position can be extremely difficult and time consuming in rough terrain. In contrast, the invention involves the formation of boreholes below ground, which can be done in largely the same way as for gentle/even terrains. Execution of the survey and therefore acquisition of the seismic data is then simple, as described above. In fact, in any seismic survey operation, the method and system of the present invention can be advantageous since the impact on the environment is minimised, which is desirable in all geographic locations.

**Claims**

1. A method of conducting a seismic survey comprising using at least one seismic source, at least one seismic receiver and at least two generally horizontal boreholes extending through a region of the ground to be surveyed, at least one of the boreholes being provided with at least one seismic receiver positioned therein (receiver borehole) and at least one of the boreholes being provided with at least one seismic receiver, at least one seismic source or at least one seismic receiver and at least one seismic source positioned therein, wherein the seismic source(s) emits an acoustic signal and the seismic receiver(s) records the reflection of the acoustic signal.

2. A method according to claim 2, wherein at least one seismic receiver is positioned in each of the boreholes and said seismic source is positioned on the surface above.

3. A method according to claim 1, wherein said seismic source is positioned in one of the boreholes (source borehole).

4. A method according to claim 3, in which the depth of the source borehole and the depth of the receiver borehole differ by no more than 200m, preferably no more than 20m.

5. A method according to claim 3 or claim 4, wherein the direction of the source borehole extends at an angle of between 45° and 135° to the direction in which the receiver borehole(s) extends.

6. A method according to any one of claims 3 to 5, wherein multiple receiver boreholes and multiple source boreholes are provided.

7. A method as claimed in any one of claims 3 to 6, in which one or more movable seismic sources are provided in each source borehole, each source being moved from one pre-designated shot point to subsequent pre-designated shot points along the source borehole and emitting an acoustic signal at each of the pre-designated shot points.

8. A method as claimed in any one of the preceding claims, in which multiple spaced apart receivers are positioned along each of the receiver boreholes, the receivers being stationary during the survey.

9. A method as claimed in any one of claims 1 to 8, in which a set of receivers are provided in each receiver borehole, the receivers being spaced apart from each other within the set, and the method including moving the set along the borehole in increments of pre-defined distance.

10. A method according to any one of the preceding claims, in which a fluid is present in the boreholes to couple the seismic receiver and optionally the seismic source to the surrounding earth.

11. A method according to any one of the preceding claims, in which the boreholes are between 20m and 500m deep.

**12.** A method according to any one of the preceding claims, including the further steps of determining positions for boreholes suitable for use in the survey, and drilling the boreholes in the positions so determined.

**13.** A method according to claim 12, including the step of drilling at least one of the boreholes from a pre-existing structure.

**14.** A seismic survey system comprising at least one seismic source, at least one seismic receiver and at least two generally horizontal boreholes extending through a region of ground to be surveyed, at least one of the boreholes having at least one seismic receiver positioned therein and at least one of the boreholes having at least one seismic receiver, at least one seismic source or at least one seismic receiver and at least one seismic source positioned therein, wherein the seismic receiver(s) is adapted to record reflected acoustic signals emitted by the seismic source(s).

**15.** A system as claimed in claim 14, comprising multiple boreholes in each of which a seismic source is positioned (source boreholes) and comprising multiple boreholes in each of which a set of seismic receivers is positioned (receiver boreholes), the receivers of each set being space apart from adjacent receivers in that set, and further comprising means for moving the seismic sources and optionally means for moving the seismic receivers within the respective boreholes.

**16.** A system as claimed in claim 15, in which the direction of the source boreholes extends at an angle of between 45° and 135° to the direction in which the receiver borehole(s) extends.

EP 2 163 918 A1

Figure 1

Figure 2

Figure 3

9

Europäisches
Patentamt

European
Patent Office

Office européen
des brevets

## EUROPEAN SEARCH REPORT

Application Number

EP 08 25 1855

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/202425 A1 (CURTIS MICHAEL P [US] ET AL) 30 October 2003 (2003-10-30) * the whole document * * abstract; claims 39-41,44,46-48; figures 2,4,5 * * page 3, lines 13-21, paragraph 32 * ----- | 1-16 | INV. G01V1/00 G01V1/42 |
| X | GB 2 355 477 A (BAKER HUGHES INC [US]) 25 April 2001 (2001-04-25) * abstract; figures 2,2a * ----- | 1,14 | |
| X | US 2002/092701 A1 (NORRIS MICHAEL [US] ET AL) 18 July 2002 (2002-07-18) * paragraphs [0012], [0043], [0049] - [0052]; figures 1,2,5 * ----- | 1,14 | |
| A | EP 0 780 701 A (GAZ DE FRANCE [FR]) 25 June 1997 (1997-06-25) * abstract; figure 2 * ----- | 1,9,14 | |

| | | | TECHNICAL FIELDS SEARCHED (IPC) |
|---|---|---|---|
| | | | G01V |

The present search report has been drawn up for all claims

| Place of search | Date of completion of the search | Examiner |
|---|---|---|
| The Hague | 12 February 2009 | De Bekker, Ruben |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 25 1855

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2009

| Patent document cited in search report | | Publication date | Patent family member(s) | | Publication date |
|---|---|---|---|---|---|
| US 2003202425 | A1 | 30-10-2003 | AU 2003225118 A1<br>WO 03091749 A2 | | 10-11-2003<br>06-11-2003 |
| GB 2355477 | A | 25-04-2001 | CA 2320393 A1<br>NO 20004769 A | | 28-03-2001<br>29-03-2001 |
| US 2002092701 | A1 | 18-07-2002 | NONE | | |
| EP 0780701 | A | 25-06-1997 | FR 2742879 A1<br>NO 965525 A | | 27-06-1997<br>23-06-1997 |

EPO FORM P0459

For more details about this annex : see Official Journal of the European Patent Office, No. 12/82

**EP 2 163 918 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0443234 A
- WO 03023450 A
- WO 08025986 A